# EUROPEAN PATENT APPLICATION

(11) **EP 2 581 780 A1**
(43) Date of publication of application: **17.04.2013**
(21) Application number: 12186798.0
(22) Date of filing: 01.10.2012
(51) Int. Cl.: G02C 5/00, G02C 1/06, G02C 1/04, G02C 5/18

(54) **Unit for eyeglasses**

(30) Priority: 13.10.2011 TW 100137190
(71) Applicant: Chang, Jung-Shih, 412 Taichung City (TW)
(72) Inventor: Chang, Jung-Shih, 412 Taichung City (TW)
(74) Representative: Becker Kurig Straus

(57) **Abstract**

A temple (14) or a front section (12) for eyeglasses (10) that includes a tube (30) with a longitudinal axis (X). The tube (30) includes at least a layer (32 or 34) made of fiber reinforced plastic materials. The layer (32 or 34) has a plurality of fiber yarns (36, 38, 40) being woven in such a way that each of fiber yarns (36, 38, 40) extends in a predetermined angle relative to the longitudinal axis (X) of the tube (30) so that the temple (14) or front section (12) is lightweight, strong enough, and has a well elasticity.

## Description

### BACKGROUND OF THE INVENTION

### 1. Field of the Invention

The present invention relates to eyeglasses, more particularly, to a specially designed unit or assembly for eyeglasses.

### 2. Description of the Related Art

It is well known that prior art eyeglasses frames, such as front sections or temples, generally are made of plastics or lightweight metals. For keeping a well strength, the plastic frames are configured to have a large size but the result is that prior art eyeglasses built up by such frames are overweight. On the other hand, the metal frames are lightweight but not strong enough so that they are easily deformed.

Furthermore, there are generally two types of prior art front sections for eyeglasses. The first one, called full rim type, has a pair of rims and each of the rimes has an upper portion and an under portion to define an opening to receive an optical lens therein. For the opening is a limited and closed space, it is time-consuming and difficult to install and remove the optical lens of the eyeglasses in and from such opening. The second one, called half rim type, includes two opposite upper or under half-rims made of plastics or metal and integrally connected by an intervening bridge, two lengths of high-tension thread. Each length of high-tension thread is stretched round the lower circumference of an optical lens to hold the lens in cooperation with the upper or under half-rim. Such a half rim type eyeglasses is lightweight but still needs to be improved because it is time-consuming and difficult to install and remove the optical lens in and from respective rims.

### SUMMARY OF THE INVENTION

Accordingly, one object of the present invention is to provide a unit for eyeglasses by which the eyeglasses constructed is lightweight, strong enough and has a well elasticity.

Another object of the present invention is to provide an assembly for eyeglasses that the optical lens can be easily and quickly installed therein and removed therefrom.

Embodiment of the present invention provides a temple or a front section for eyeglasses that includes a tube with a longitudinal axis. The tube includes at least a layer made of fiber reinforced plastic materials. The layer has a plurality of fiber yarns being woven in such a way that each of fiber yarns extends in a predetermined angle relative to the longitudinal axis of the tube so that the temple or front section is lightweight, strong enough, and has a well elasticity.

Further speaking, one of embodiments of the present invention is a temple of eyeglasses which includes a tube with a longitudinal axis. The tube has at least a layer made of fiber reinforced plastic containing thermosetting resin and reinforcing fiber. The layer includes a plurality of first fiber yarns being woven in such a way that each of first fiber yarns extends in a first angle relative to the longitudinal axis of the tube, and a plurality of second fiber yarns being woven in such a way that each of first fiber yarns extends in a second angle relative to the longitudinal axis of the tube.

The temple mentioned above can be arranged that the first angle thereof is within a range from +30° to+60° relative to the longitudinal axis of the tube, the second angle thereof is within a range from -30°to-60° relative to the longitudinal axis of the tube.

Furthermore, another embodiment of the present invention is a front section of eyeglasses which is configured to have a stick member with a first end and a second end, a first leg extending upwardly or downwardly in a predetermined length from the first end of said stick member, and a second leg extending upwardly or downwardly in a predetermined length from the second end of said stick member, said stick member, said first leg and said second leg defining a receiving space to receiving an optical lens. The front section herein includes a tube with a longitudinal axis. The tube has at least a layer made of fiber reinforced plastic containing thermosetting resin and reinforcing fiber. The layer has a plurality of fiber yarns being woven in such a way that each of fiber yarns extends in a predetermined angle relative to the longitudinal axis of the tube. Thus, when an eyeglasses is constructed by such front sections, the optical lens of the eyeglasses can be easily and quickly installed therein and removed therefrom.

### BRIEF DESCRIPTION OF THE DRAWINGS

FIG. 1 is a perspective view of an eyeglasses with a temple embodied by a first aspect of the present invention;
FIG. 2 is a partial cross-sectional view of the temple shown in FIG. 1;
FIG. 3 is a perspective view of an eyeglasses with a front section embodied by a second aspect of the present invention;
FIG. 4 is a partial disassembled perspective view of the eyeglasses shown in FIG. 3;
FIG. 5 is a partial cross-sectional view of the front section of the eyeglasses shown in FIG. 3; and
FIG. 6 is a perspective view of an eyeglasses with a front section embodied by a third aspect of the present invention;

### DETAILED DESCRIPTION OF THE INVENTION

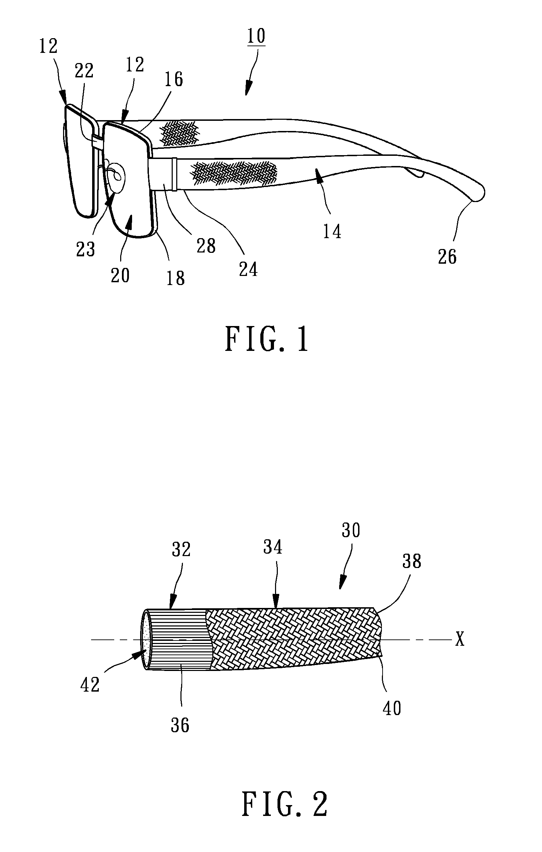

Referring firstly to FIGS. 1 and 2, eyeglasses 10 includes a pair of front sections 12 and a pair of temples 14. Each of temples 14 is constructed according to a first aspect of the present invention.

In this embodiment, each of front sections 12 is made by lightweight metals, such as titanium, and has an upper rim 16 and an under rim 18 to define an opening to receive an optical lens 20. Front sections 12 are connected by a bridge 22. A pair of nose pads 23 are respectively disposed on the opposing inner side of each of under rims 18.

Each of temples 14 has a first end 24 and a second end 26. The distance from first end 24 to second end 26 defines the length of each of temples 14. First end 24 of each of temples 14 is respectively pivotally secured by a hinge 28 to the outer side of upper rim 16 of each of front sections 12.

Each of temples 14, in this embodiment, has a tube 30 with a longitudinal axis X. Tube 30 includes an inner layer 32 and an outer layer 34. Both of inner and outer layers 32, 34 are made of fiber reinforced plastic containing epoxy resin and carbon reinforcing fiber. Inner layer 32 includes a plurality of first fiber yarns 36 being woven in such a way that the extending direction of each of first fiber yarns 36 is parallel with the longitudinal axis X of the tube 30. Outer layer 34 is woven by a plurality of second fiber yarns 38 and a plurality of third fiber yarns 40. The extending direction of each of second fiber yarns 38 is+45° relative to the longitudinal axis of tube 30. The extending direction of each of third fiber yarns 40 is -45° relative to the longitudinal axis of tube 30.

For having such temples 14, eyeglasses 10 is lightweight, strong enough, and has a well elasticity. Furthermore, each of temples 14 can be made to further include a core 42 made of foam plastic materials, such as PU foam, and being filled into tube 30 so that temples 14 are more durable.

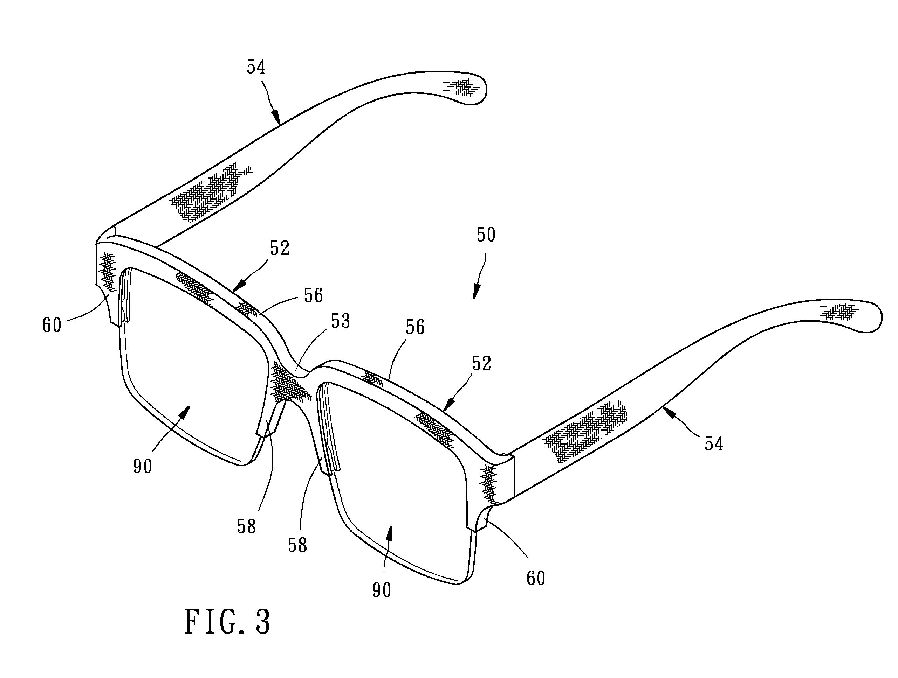

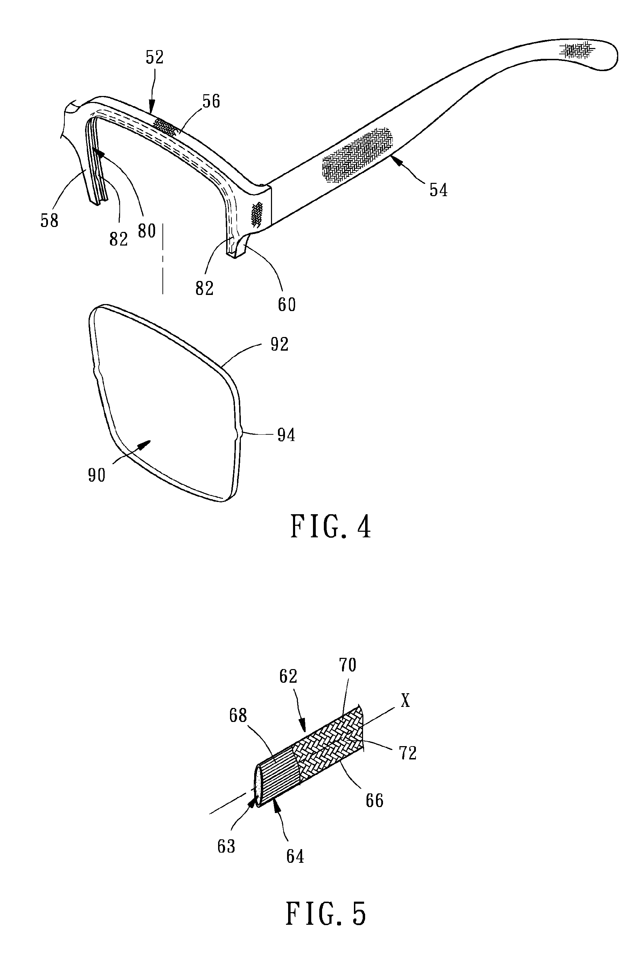

Referring further to FIG. 3 to FIG. 5, eyeglasses 50 also includes a pair of upper front sections 52 and a pair of temples 54. But upper front sections 52 are different from that of eyeglasses 10. Each of upper front sections 52 herein is constructed by a second aspect according to the present invention.

Upper front sections 52 are joined together at their inner ends by a bridge 53. Each of upper front sections 52 includes a tube 62 being configured to have a stick member 56 with a first end and a second end, a first leg 58 extending downwardly in a predetermined length from the first end of stick member 56, and a second leg 60 extending downwardly in a predetermined length from the second end of stick member 56.

Tube 62, in this embodiment, also has a longitudinal axis X and an inner layer 64 and an outer layer 66. Both of inner and outer layers 64, 66 are made of fiber reinforced plastic containing epoxy resin and carbon reinforcing fiber. Inner layer 64 includes a plurality of first fiber yarns 68 being woven in such a way that the extending direction of each of first fiber yarns 68 is parallel with the longitudinal axis X of tube 62. Outer layer 66 is woven by a plurality of second fiber yarns 70 and a plurality of third fibers 72. The extending direction of each of second fiber yarns is+60° relative to the longitudinal axis X of tube 62. The extending direction of each of third second fiber yarns 72 is - 60° relative to the longitudinal axis of tube 62.

Furthermore, each of upper front sections 52 can be made to further include a core 63 made of foam plastic materials, such as PU foam, and being filled into tube 62 so that front sections 52 are more durable.

In this embodiment, each of upper front sections 52 further has a recessed slot 80 disposed on the inner surface thereof and configured that has a diameter being slightly smaller than the outer diameter of optical lens 90. For each of upper front sections 52 has well elasticity and is designed in the way mentioned above so that it just needs a small force to install and remove optical lens 90 into and away from upper front sections 52. In other words, optical lens 90 can be easily and quickly installed or removed in and from upper front sections 52.

In addition, slot 80 could be designed to at least have a notch 82 for being lodged in by a protruding 94 disposed on the edge 92 of optical lens 90 so that optical lens 90 can be tightly installed in slot 80.

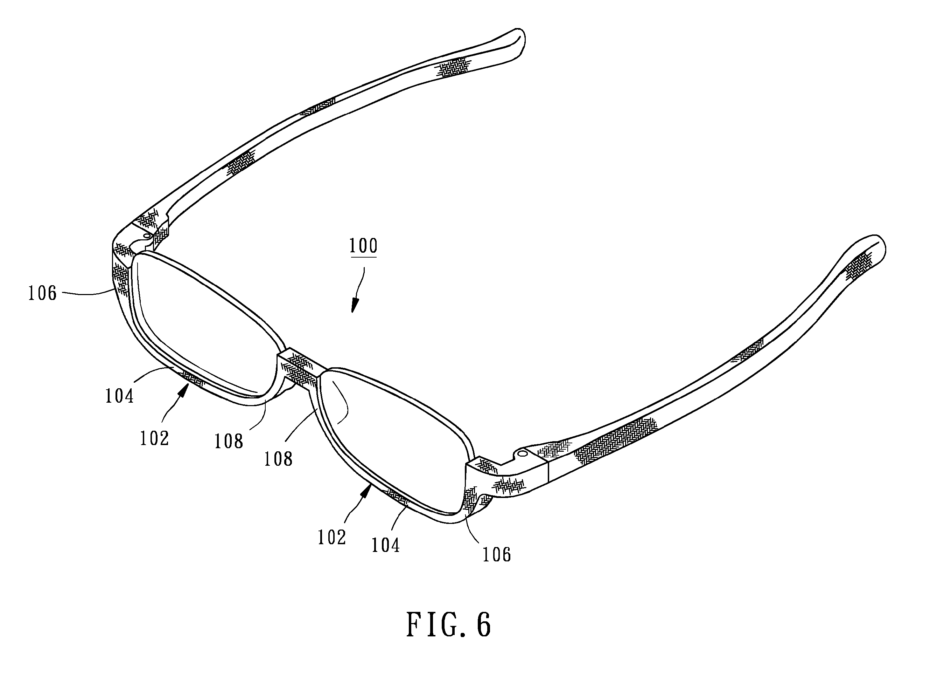

Lastly, referring to FIG. 6, eyeglasses 100 includes a pair of lower front sections 102, each of lower front sections 102 is constructed by a third aspect according to the present invention.

The difference between front sections 102 and front sections 52 is that each of front sections 102 includes a tube (not shown in FIG. 6) being configured to have a stick member 104 with a first end and a second end, a first leg 106 extending upwardly in a predetermined length from the first end of stick member 104, and a second leg 108 extending upwardly in a predetermined length from the second end of stick member 104.

## Claims

1. A unit (10) for eyeglasses being **characterized in** comprising:
a tube (30) having a longitudinal axis (X) and a first layer (32) made of fiber reinforced plastic containing thermosetting resin and reinforcing fiber; and
said first layer (32) including a plurality of first fiber yarns (36) being woven in such a way that each of said first fiber yarns (36) extends in a first angle relative to the longitudinal axis (X) of said tube (30).

2. The unit (10) according to claim 1, being **characterized in that** said first layer (32) further includes a plurality of second fiber yarns (38) being woven in such a way that each of said second fiber yarns (38) extends in a second angle relative to the longitudinal axis (X) of said tube (30).

3. The unit (10) according to claim 1, being **characterized in that** said tube (30) further has a second layer (34) made of fiber reinforced plastic containing thermosetting resin and reinforcing fiber, said second layer (34) including a plurality of second fiber yarns (38) being woven in such a way that each of the second fiber yarns (38) extends in a second angle relative to the longitudinal axis (X) of said tube (30), and a plurality of third fiber yarns (40) being woven in such a way that each of third fiber yarns (40) extends in a third angle relative to the longitudinal axis (X) of said tube (30).

4. The unit (1-) according to claim 2, being **characterized in that** said first angle is within a range from +30° to +60°, said second angle is within a range from - 30° to -60°.

5. The unit (10) according to claim 3, being **characterized in that** said second angle is within a range from +30° to+60°, said third angle is within a range from - 30°to-60°.

6. The unit (10) according to claim 4, being **characterized in that** said first angle is +45° and said second angle is -45°.

7. The unit (10) according to claim 5, being **characterized in that** said second angle is +45° and said third angle is -45°.

8. The unit (10) according to claim 1, 2 or 3, being **characterized in that** the unit (10) further comprises a core (42) filled in said tube (30), said core (42) being made of foam plastic material.

9. The unit (10) according to claim 1, 2 or 3, being **characterized in that** said tube (30) includes a first end (24) and a second end (26), the distance from said first end (24) to said second end (26) defining the length of said unit (10).

10. The unit (50) according to claim 1, 2 or 3, being **characterized in that** said tube (62) includes a stick member (56) with a first end and a second end, a first leg (58) extending upwardly or downwardly in a predetermined length from the first end of said stick member (56), and a second leg (60) extending upwardly or downwardly in a predetermined length from the second end of said stick member (56), said stick member (56), said first leg (58) and said second leg (60) defining a receiving space (80) to receiving an optical lens (20).

11. The unit (50) according to claim 10, being **characterized in that** said receiving space (80) is a recessed slot disposed in an inner surface of said tube (62).

12. The unit (50) according to claim 11, being **characterized in that** said slot (80) has at least a notch (82) for being lodged in by a protruding disposed on the optical lens (20) received in said slot (80).
